# EUROPEAN PATENT APPLICATION

(11) **EP 4 703 291 A1**
(43) Date of publication of application: **04.03.2026**
(21) Application number: 24196816.3
(22) Date of filing: 27.08.2024
(51) Int. Cl.: B65G 1/04, B65G 1/137

(54) **CONTAINER ACCESS STATION**

(71) Applicant: AutoStore Technology AS, 5578 Nedre Vats (NO)
(72) Inventor: IVARJORD, Åsmund, 5578 Nedre Vats (NO)
(74) Representative: Kilburn & Strode LLP

(57) **Abstract**

The disclosure relates to a container access station (500) configured to receive a container at a container-handling position. The container access station comprises an access opening (502) configured to provide access to a container when the container is received at the container handling position; a door (504) configured to cover the access opening (502) in a closed position and allow access to the access opening in an open position; and a display means (512) configured to display a set of one or more display elements on the door.

## Description

### TECHNICAL FIELD

The disclosure relates to a container access station. More particularly, it relates to a container access station configured to receive a container, an automated storage and retrieval system comprising the container access station and a method for using the container access station.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

At a port, a movement mechanism may move the containers between the grid and a location providing access to the containers. For example, ports can be used to enable access to a container by an operator for the purpose of picking and/or stocking operations in which items are removed from and/or positioned into containers. Containers may be sequentially transported to a port in order for their respective goods to be accessed in turn. Alternatively, or in addition, goods may be put into one or more of the containers at a port for storing in the grid. A port therefore provides an interface between the interior of the grid where containers are stored and the exterior of the grid where containers are accessed. Since the port provides access to locations where containers, robots (or parts thereof) and other equipment is moving, in an automated manner, a safety hatch can be provided as part of the port in order to prevent an operator at the port to coming into contact with moving components whilst the container is moved to/away from the port. The safety hatch may be opened so that an operator can access a container when the container is stationary at an access position of the port.

It can be useful to provide and/or display information which can facilitate the operator in their picking and/or stocking operations. For example, information may be displayed via a computer monitor located at a workstation near to the port. In general, it is desirable to display such information in a manner that is space-efficient and that facilitates a smooth workflow for the operator.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5a shows a perspective view of a container access station according to an embodiment of the present disclosure, with a door in a closed position;
Fig. 5b shows a perspective view of the container access station of Fig. 5a with a door in an open position;
Fig. 6 shows a plan view of a container access station with a container in a container handling position;
Fig. 7 shows a flowchart diagrammatising a method for using a container access station.

### Detailed description

In overview, the disclosure relates to a container access station which comprises an access opening to allow an operator to access a container received in a container handling position within the container access station. The container access station further comprises a door, also referred to as a cover, which when in a closed position (also referred to herein as the first position), covers the access opening to prevent access to the container. The door can be moved to an open position (also referred to as the second position), in which an operator can access a received container (i.e., a container received at the container handling position) via the access opening. The container access station further comprises a display means for displaying a set of information, instructions and/or display elements on the door. Providing a display means can be used to better facilitate an operator in performing their picking and/or stocking operations. For example, by displaying a set of display elements comprising information and/or instructions, the display means assists the operator in performing picking and/or stocking by means of a continued and guided human-machine interaction process, that process being the passage of goods into and out of a storage system (e.g. an automated storage and retrieval system) through the interaction between the system and a human operator. Displaying the set of display elements on the door optimises the space efficiency of the container access station by leveraging the existing door space to function as a display area. In this way, the need for a separate dedicated display area (e.g., a separated computer monitor or display panel) that would otherwise occupy additional space or would require a separate display surface is mitigated. Moreover, displaying the set of display elements on the door through which a container is accessed enables the display elements to be displayed directly over a received container, thereby providing a more efficient display means whereby the display elements can be easily correlated to the received container.

### Automated storage and retrieval system overview

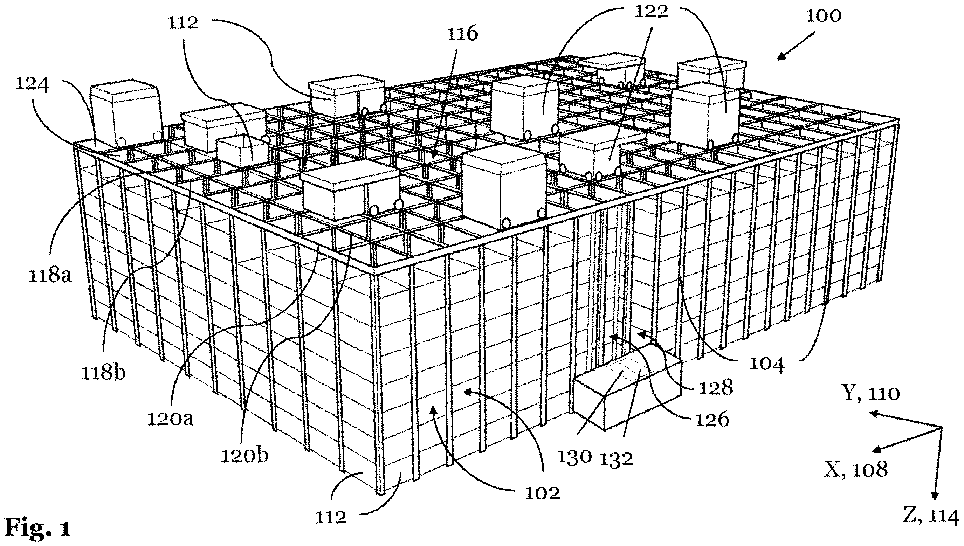

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

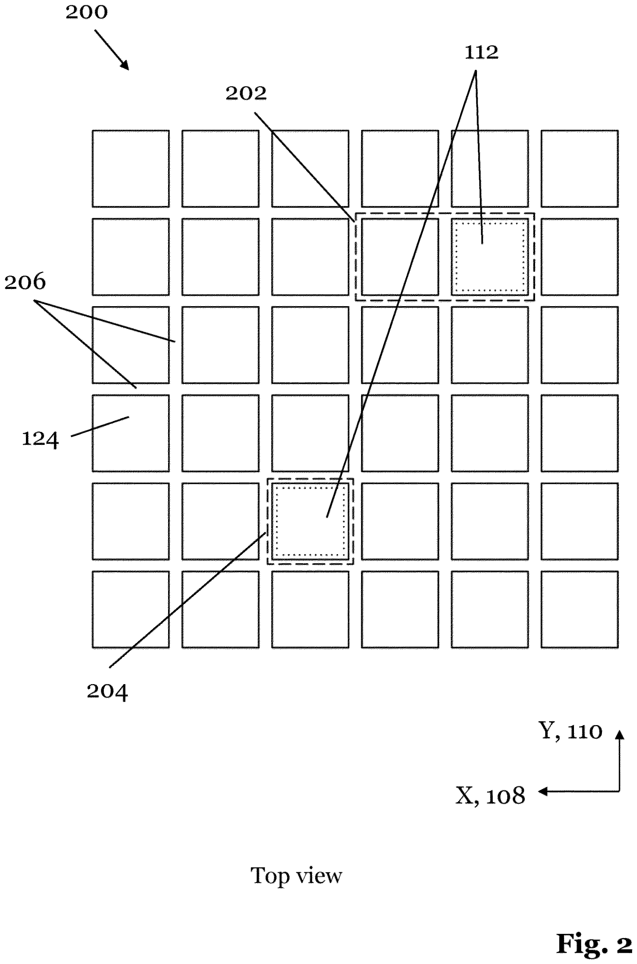

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

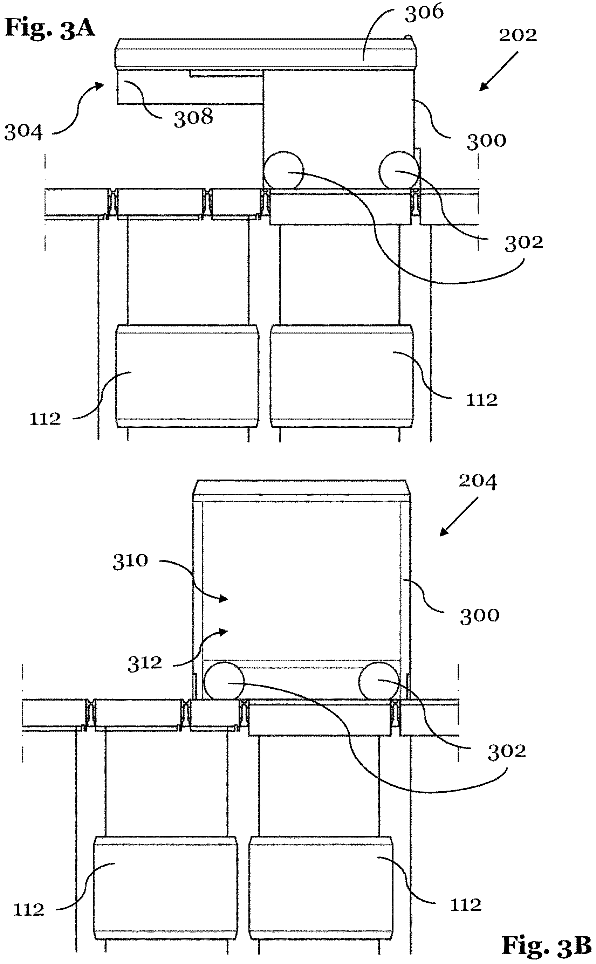

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

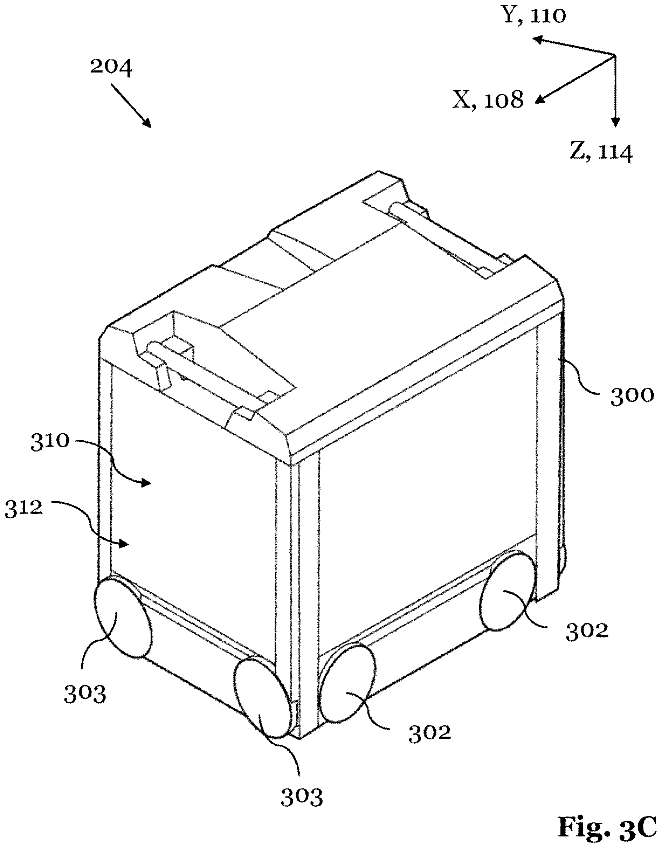

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

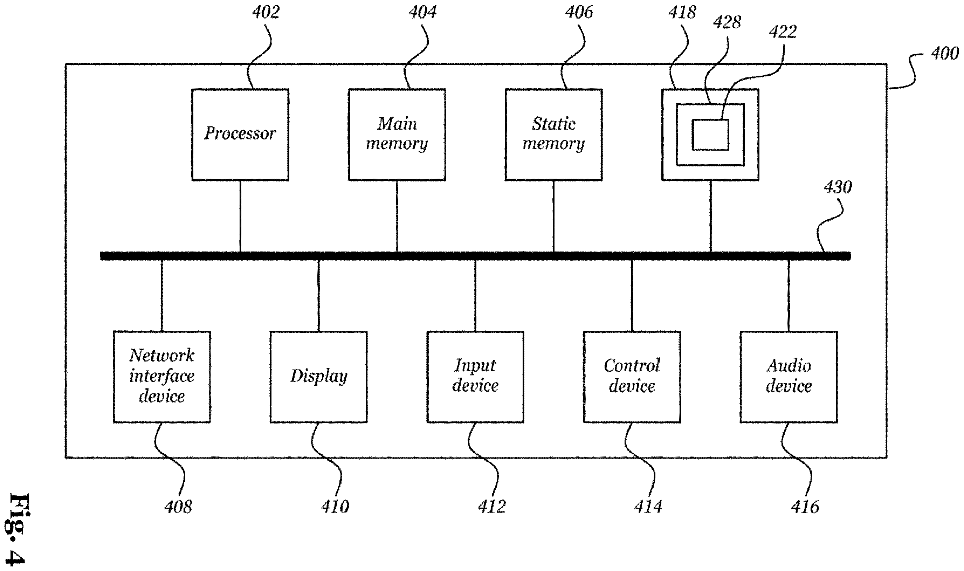

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which maybe marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements

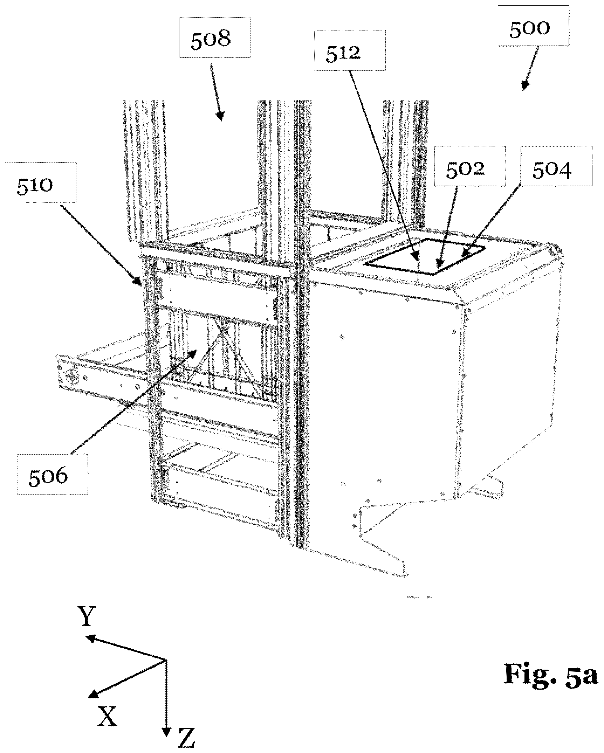

Referring to the embodiment shown in Fig. 5a, a container access station 500, also referred to as a port, is depicted coupled to a port column 508 of the storage grid. The container access station 500 may correspond to one of ports 130, 132 referred to in relation to Fig. 1. The port column 508 may correspond to one of port columns 126, 128 referred to in relation to Fig. 1. Fig. 5a also depicts a vertical frame member 510, which may correspond to vertical frame member 104 referred to in relation to Figure 1. In other words, the container access station 500 as depicted in Fig. 5a may be coupled to the grid 100 referred to in relation to Fig. 1 (referred to interchangeably as a storage grid 100 herein) via a port column 508/126. In general, the container access station 500 may be configured for coupling to the storage grid 100. In some examples, the container access station 500 and storage grid 100 may be integral.

As used herein, the container access station 500 may be described as a workstation, an access station, a container access station, a container access station or a picking station. In general, the container access station 500 is configured to receive a container, otherwise known as a bin 112 (e.g. from the automated storage and retrieval system) at a container-handling position, whereby when the container is positioned at the container-handling position of the container access station, an operator is able to access the container for interaction with the container itself (e.g. removing the container and/or reinserting a container), or for interaction with the goods stored therein. In some examples, the container access station 500 comprises a body, which may also be described as a frame, cabinet or a housing. The body may comprise a three-dimensional structure comprising one or more solid panels separating an interior of the container access station 500 from an exterior of the container access station 500. The body may prevent access to the interior of the container access station 500 (except through the access opening 502 when appropriate) and may therefore also enable safe operating of the container access station 500 by the operator. In other words, the body of the container access station may function as a protective barrier between operators and containers that are moving between the grid and the container handling position. In such examples, the interior of the container access station, defined by the solid panels, may comprise the container-handling position. In other words, a container access station may comprise a body defining a cavity which is configured to receive a container therein, such that the container may be accessed by an external operator.

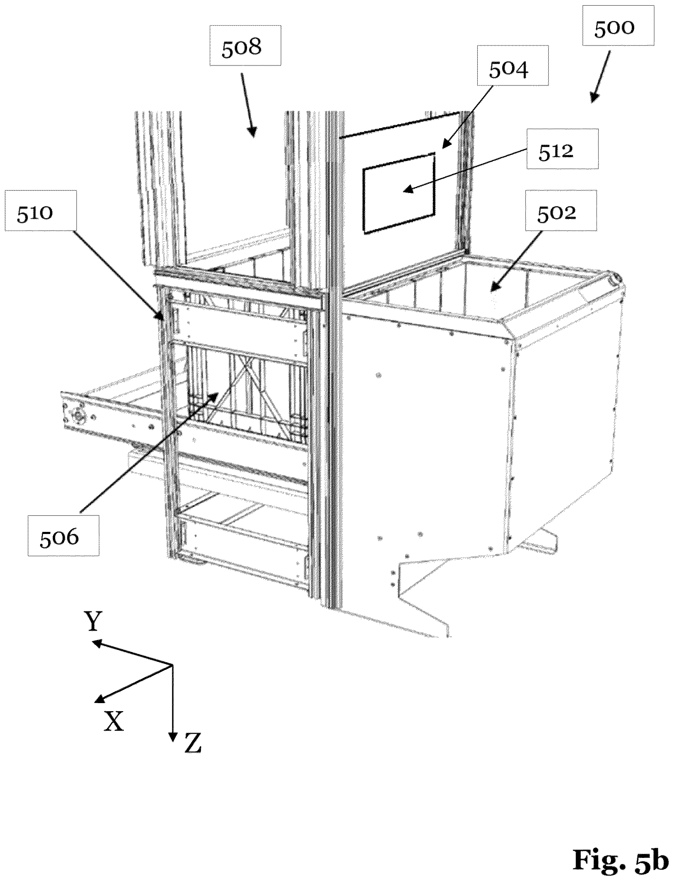

The container access station 500 comprises an opening 502, also referred to as an access opening 502 which is better shown in Fig. 5b. In Fig. 5a, the access opening 502 is concealed by a door 504 which is described in more detail below. The access opening 502 is configured to enable retrieval of goods therethrough from a container received in the container-handling position (e.g., a container received from the storage grid 100, via the port column 508, and received inside the body of the access station 500). In some embodiments, the entire container itself may be retrieved through the access opening 502. As described in more detail below, the access opening may be covered by a door or cover. When the access opening 502 is uncovered, an operator standing adjacent to the container access station 500 may retrieve goods from a container through the opening. In some embodiments, the access opening is defined by a cutout portion of a top-most panel of the body of the container access station. For example, the cutout may be square, rectangular, or any other shape. In some examples, the shape and size of the cutout (i.e., the shape and size of the access opening 502) corresponds to the shape and size of the containers that the station is configured to receive. In other examples, such as the one shown in Fig. 5b, the access opening may be defined by the side panels of the container access station. The tops of each side panel may comprise a lip or a border mounted thereon, which defines the opening 502 in the top of the container access station as shown in Fig. 5b. Preferably, the access opening is situated directly above the container handling position, such that when a container is received in the container handling position, the access opening provides direct access to said container.

Whilst the particular example depicted in Fig. 5a and 5b shows the access opening arranged at the top of the container access station, it would be appreciated that in other examples the access opening may be arranged at a side of the container access station. For example, referring again to Fig. 5a, the access opening may be on the rightmost panel as shown in the Figure (i.e., a front panel of the station 500). In other examples, the container, when received at the container-handling position, may be tilted with respect to one or more of the X-, Y- and Z-axes. In such examples, a panel of the access station that comprises the access opening may also be tilted in orientation, such that the orientation of the access opening corresponds to the opening of the container when the container is situated in the container handling position.

The container access station 500 further comprises a door 504 also referred to as a cover 504. As depicted in Fig. 5a, the door 504 covers, i.e., conceals, the access opening 502 when the door 504 is in a closed position. In the example shown in Figure 5a (in which the access opening is in a top-most panel of the container access station), the door is depicted as being located directly vertically above the access opening 502, however this is not essential for all embodiments. The door 504 may comprise a horizontal plane made of a solid material, preferably a transparent material such as glass or transparent plastic such as PMMA (polymethyl methacrylate) that extends substantially across the span of the access opening 502. A transparent door/cover 504 enables the interior of a container to be viewed therethrough. The door 504 is configured to move between a closed position (also referred to as a closed location, first location or first position) in which access to any container located at the container handling position is obstructed (as seen in Fig. 5a), and an open position (also referred to as an open location, second position or second location) as seen in Fig. 5b, wherein access to a container located at the container handling position is enabled via the access opening 502. In other words, in the closed position, the access opening 502 may be fully covered by the door to prevent any access therethrough in the open position, the access opening is at least partially or wholly uncovered. In the specific example shown, the door 504 moves between the closed position and the open position by lifting the door 504 through an approximately 90° rotational arc from lying flat (along the XY plane) into a substantially vertical position (aligned with the Z-axis). However, it should be understood that the door can be moved in any manner appropriate to transition it from a position in which it obstructs the access opening, the closed position, and a position in which it does not obstruct the access opening, an open position. Movement of the door may be automated by a drive system, comprising motors or any suitable drive mechanism that is capable of causing the door to move (translationally, rotationally, or otherwise) between an open and a closed position. Alternatively, transition between the closed and open positions may be effected manually by an operator. The door may be on hinges, sliding, or may be removable as a cover from the container access station. In some examples, the door may comprise multiple separate portions such as flaps or panels that collectively cover/uncover the access opening 502. As used herein, the door 504 may be referred to as a hatch, a shutter, cover or a safety hatch.

When the door 504 is moved to its open position, it maybe possible to retrieve goods from (or place goods into) a container through the access opening 502, since the cover does not obstruct, block or cover the access opening 502.

In some examples, the container access station 500 may comprise a conveyor 506 as in Fig.5a. The conveyor is configured to move one or more containers between the storage grid 100 and the access opening 502. In other words, the conveyor 506 may be configured to move one or more containers between the port column 508 and the access opening 502. The conveyor 506 may comprise one or more belts each wrapped around two or more drums. One or more of the drums may be driven to rotate, for example by an (electric) motor. The drum(s) may be coupled to the belt through friction and optionally through one or more interlocking features to cause the belt to rotate around the drums. A container placed on the belt of the conveyor 506 may thus be moved in the Y-direction (towards or away from the container handling position) depending on whether the drum(s) is/are driven to rotate in a clockwise or anticlockwise direction.

The conveyor 506 may be described as being comprised in the container access station 500. When the container access station 500 is coupled to the storage grid 100, at least part of the conveyor 506 may also be disposed in, located in or comprised in the storage grid 100, for example beneath the port column 508 of the storage grid 100. A container, held by a robot (e.g., a robot 202 or 204) disposed on the rails at the top of the storage grid, may be lowered down (in the Z-direction) the port column 508 and deposited on the conveyor. When the container reaches the conveyor 506, the conveyor 506 may be used to translate the container to the container handling position. Conversely, when goods are placed into the container via the access opening, the conveyor 506 may be used to move the container from the container handling position to beneath the port column 508. A robot disposed on the rails at the top of the storage grid may then lift the container to be stored in the storage grid 100. The bottom of the port column 508 (i.e., the part of the port column 508 below the vertical height of the door 504, may be referred to as a put/get cell.

The container access station 500 may alternatively or additionally utilize means other than a conveyor 506 for moving a container between the container handling position within the container access station 500 and the port column 508. For example, a lift, carousel and/or drawer may be used by the container access station 500 to interface with the port column 508 in order to move a container between the put/get cell and a location beneath the access opening 502 of the container access station 500. That is to say a container access station with a conveyer 508, as in Fig.5a, is provided in detail as but one example embodiment and in order to provide the context of the container access station within a wider automated storage and retrieval system. As such, it is made clear that the container access station 500 of the present disclosure is not limited to embodiments comprising a conveyor 506 and may instead comprise any suitable means for transporting a container from one position (at which the container is received from the storage grid) to the container handling position. In yet further embodiments, the container access station does not in and of itself comprise any such means for transporting containers to a container handling position. In such embodiments, the container access station itself may be configured to interact with a separate conveyor (which may be a part of the storage grid 100) that is configured to transport a container to the container handling position.

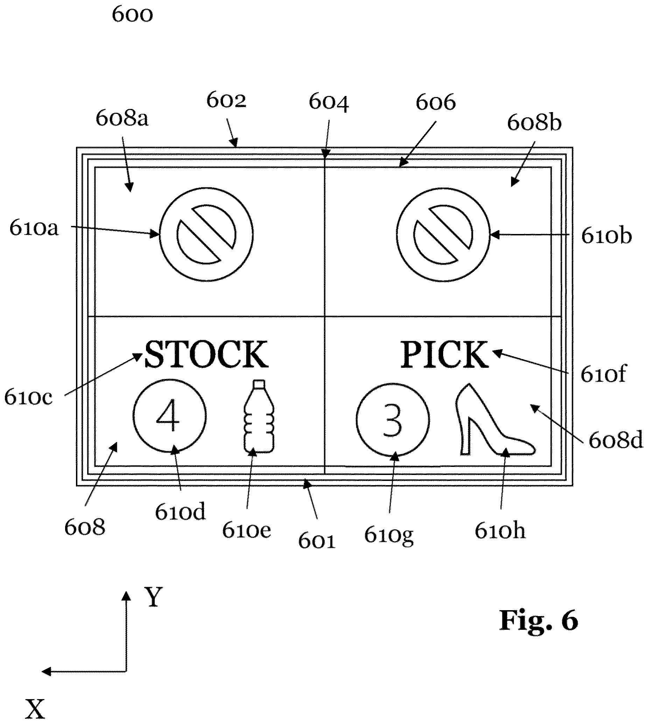

As shown in Fig. 5a, the container access station 500 further comprises display means 512 configured to display a set of display elements on the door 504 or directly onto a container received at the container handling position. The display elements themselves are described in more detail below with reference to Fig. 6. In some embodiments, the display means 512 is a display screen 512 fixed to the door 504. The display screen 512 may, for example, be one of an LCD, OLED or LED screen and is preferably transparent, or translucent (like the door) such that when the door is in a closed position, a received container can be seen by an operator through the display means 512 and the door 504. In general however, the display means may be any suitable means (transparent, translucent, or otherwise) that would be apparent to a skilled person and which is capable of displaying a set of one or more display elements on the door 504. For example, the display means may comprise a screen fixed to the door and may also comprise a projector configured to project the display elements onto the screen.

In examples where the display means is not transparent or translucent (i.e. the container cannot be seen through the display means when the door is in the closed position), the display means 512 may be capable of displaying a video feed of the inside of the container access station 500 in order to display the contents of container retained in the container handling position. In these embodiments, the set of display elements can be displayed as on overlay to the video feed on the display screen 512. That is to say, a video feed of the container in the container access station can be overlaid with the set of display elements and displayed on the display screen 512. The display screen can be attached to the door 504 by any appropriate means such as, but not limited to, friction, screws and/or glue, and/or any other suitable means apparent to the skilled person. In some examples, the display means 512 comprises a display screen attached to the underside of the door 504 (visible to an operator when the door is in an open position as shown in Fig. 5b) and additionally or alternatively a display screen attached to the top of the door 504 (visible when the door is in a closed position as shown in Fig. 6).

The display means 512 may alter, manipulate and/or adjust the set of display elements by, for example, changing their position and/or orientation, and/or mirroring display elements, in order to appropriately display the set of display elements in relation to the container and in a manner viewable to the operator.

As mentioned above, in some examples the display means may comprise one or more projectors. A projector may be mounted inside the container access station such that it can project a set of display elements onto door 504 from the underside of the door 504, wherein the door 504 is transparent or translucent so that the set of display elements is visible to an operator viewing the door from the other side. A projector may alternatively or additionally be mounted above the door 504 such that it can display the set of display elements onto the top of the door 504 (also visible to an operator looking generally down on the door). The one or more projectors may also project the set of display elements directly onto a container in the container handling position (for example if the door is transparent or if the door is in an open position).

The container access station may further comprise a camera (not pictured). The camera can be used to provide the video feed of the container in the container access station, as previously discussed. The camera may be used to provide information associated with the received container to a controller (described in more detail below) which can in turn be used to determine the set of display elements to display on the door using the display means. The camera may be used to determine picking and/or stocking operations being performed by the operator as described below with reference to Fig. 6. The determined operations can be used to determine an updated set of display elements and/or to otherwise alter a currently displayed set of display elements as described in more detail below.

The top of each of the containers maybe open and maybe approximately the same size as the access opening 502. As depicted in Fig. 5a, size of the access opening in the Y-direction 502 may be approximately the same as size of the door 504 in the same direction. Similarly, the size of the access opening 502 in the X-direction may be approximately the same as the size of the door 504 in the same direction. In other words, the size of the access opening 502 and the door 504, may correspond or be approximately the same (in a horizontal, X-Y plane). As such, the door 504 is capable of blocking the access opening 502 when in the closed position and at the same time does not carry excess weight (if it was otherwise oversized). By using the display means 512 to display the set of display elements on the door 504, the container access station is not required to have a larger footprint nor provide an additional surface for displaying information, preserving the container access station's 500 space efficiency and facilitating a smoother human-machine interaction as an operator interacts (picks or restocks) with a container.

In some examples, the container access station 500 may further comprise a controller. The controller may be configured to control movement of the conveyor 506 (or any other system arranged to transport a container to the container handling position, if such a system, which is optional, is comprised within the container access station), control the display means to display and/or alter the set of display elements, and/or may be configured to control movement of the door 504. The controller may comprise a computer readable medium, which is optionally non-transitory, storing instructions for implementing the control of any of the disclosed systems. For example, the controller may comprise instructions for generating and/or transmitting computer-executable instructions to one or more motors to effect movements of moveable components. The controller may further comprise instructions for selecting and controlling the display of a set of display elements via the display means 512. The controller may comprise or otherwise have access to a database of display elements wherein a set of display element stored in the database can be selected for display via the display means 512. The controller may receive input from the camera and/or other sensors in order to determine the instructions to perform, such as in order to determine the set of display elements to display via the display means 512. In some examples, the container access station 500 may comprise separate controllers for movement of the conveyor 506, control of the display means 512 and control of the door 504 respectively. In some examples, the controller is separate from the container access station and instead the container access station receives instructions directly from a controller 400 of the grid 100, as in Fig. 4, or another separate dedicated controller. In some examples, the controller can communicate with the display means via a wired connection. Alternatively, the controller can communicate with the display means wirelessly.

The container access station 500 may comprise cable management means. The cable management means may efficiently route any cables belonging to components of the container access station. The cable management means can do so in a manner as to avoid cables from obstructing moving parts of the container access station.

The container access station 500 may comprise a display means adapter. The display means adapter may enable the display means 512 to be retrofit to a container access station such that the display means can be controlled using a controller without the need for an additional separate display means controller. The display means adapter may provide the display means with wireless connectivity.

As mentioned above, Fig. 5b shows an exemplary embodiment of the container access station 500 with the door 504 in an open position. It will be appreciated that if the door 504 is not obstructing the access opening 502, such that an operator can access a container located at the container handling position, it can be considered to be in an open position. Fig.5b illustrates an example open position in which the display means is still visible to the operator when in the open position. In moving the door 504 between the closed position and the open position, the display means, or the display means controller may mirror the set of display elements so that they are readable to the operator in each respective position of the door 504. The container access station 500 may display the set of display elements on the door when in the closed position and display the set of display directly on the container when the door is in the open position. That is to say the display means may utilize one or more display screens, and/or one or more projectors and provide the most appropriate component for display depending on the position of the door. In addition to displaying the set of display elements on the door, the display means may also display the set of elements directly on the container. In some embodiments the display means determines whether it is more appropriate to display the set of elements on the door or on the container directly.

Fig. 6 shows a plan view of a door 602 of a container access station 600, which is equivalent to the container access station of Fig. 5a. The door 602 is in a closed position and completely covers an access opening 601 (which from the perspective of Fig. 6 is beneath the door 602 and has substantially the same or a smaller XY footprint than the door). The container handling station is configured to receive a container 604 in the container handling position beneath the access opening 601 and the door 602. As described above, a container that is received by the container access station may comprise a plurality of compartments. In the example shown in Fig. 6 and as discussed below, the container access station displays a set of display elements corresponding to a container comprising four equally sized compartments. However, although four equally sized compartments are pictured, the container access station can display a set of display elements corresponding to a container with any number of compartments 608 and the compartments 608 need not be equally sized. A display means 606 is provided on the door 604 which is configured to display a set of one or more display elements 610 on the door. Fig. 6 shows an exemplary set of display elements, the details of which are discussed in more detail below. It would be appreciated that the set of display elements 610 can comprise any number of display elements and those provided in Fig. 6 are exemplary only and not intended to be limiting by number, size, shape or by the information displayed.

In the particular example shown in Fig. 6, the display means 606 displays a set of eight display elements 610a-h. Each display element 610a-h of the set of display elements 610 is provided in a position on the display means 606 directly over a corresponding container compartment 608a-d. With regard to the specific set of exemplary display elements illustrated in Fig, 6, display element 610a is provided directly over compartment 608a in order to instruct the operator not to pick or place items from compartment 610a of the container 604. Display element 610b is provided directly over compartment 608b in order to instruct the operator not to pick or place items from compartment 610b of the container 604. Display elements 610c-e are provided directly over compartment 608c in order to inform the operator that the operations and instructions are associated with the compartment 608c of the container 606. In this example, display element 610c informs the operator as to the operation to perform, in this example stocking, display element 610d informs the user as to a number of items to perform the operation on, in this example 4, and display element 610e informs the operator as to what items to perform the operation on, in this example bottles. 610f-h similarly provide information and instructions associated with compartment 608d; the association signified by the display elements position above compartment 608d. Although particular display elements are provided in Fig.6 these are exemplary only and any number or type of display elements 610a-h can be used in order to efficiently inform the user in order to create an efficient and accurate human-machine interaction between the operator and the container access station 500 in order to complete picking and/or placing processes.

The set of display elements 610 can be updated in real time based on the operations performed by the operator. For example, if the operator follows the display elements 610c-e associated with compartment 608c by stocking compartment 608c with a bottle, then a camera of the container access station can determine the operation performed by the operator and update the set of display elements 610 accordingly. For example, display element 610d could be updated to instead display the number "3" when an operator has placed a bottle in compartment 608c, and subsequently the number "2" and then "1" as additional bottles are stocked in the compartment 608c. In general, any one or more display elements can be updated in real time based on an operator's interaction with one or more compartments of the container.

Alternatively if the operator was to make a mistake an instead stock a shoe in compartment 608c (rather than a bottle as indicated by display element 610e), the display elements 610c-e could all be updated with, for example, element 610c changing to signify a picking operation, "PICK", element 610d changing to the number "1", and element 610e changing from a representation of a bottle to a representation of a shoe. Thus, an operator is prompted by the display elements to correct the mistake and remove the incorrectly placed shoe from compartment 608c. In general, any one or more display elements could be replaced with any other display element that signifies an incorrect human-machine interaction, such as displaying a notification as to the incorrect operation and/or an instruction in order make a correction to facilitate the correct picking and/or placing process. This real time feedback improves the human-machine interaction making it more efficient and improving the accuracy of picking and/or placing operations.

One or more of the display elements 610a-h can comprise textual, graphical and/or numerical elements. One or more of the display elements 610a-h can additionally or alternatively comprise videos, animations, 2d models and/or 3d models.

One or more of the display elements 610a-h can convey any information, notifications and/or instructions associated with the container 606 or its compartments 608a-d. The instructions can comprise, for example, placing, stocking and/or error correction instructions, such as is shown in exemplary display elements 610a, 610b, 610c, 610f. The information can comprise, for example, a quantity of items, such as is shown in exemplary display elements 610d, 610g. The information conveyed by the set of display elements 610 can comprise identifications of items, such as is shown in exemplary display elements 610e, 610h.

In some examples, one or more of the set of display elements 610 can provide additional information relevant to the picking and/or stocking operations being performed by the operator such as, but not limited to, performance analytics, operational statistics and/or gamification mechanics.

Although the display means 606 of Fig.6 are provided on the door 602 in the closed position, in some examples the display means 606 may still be able to operate when the door 602 is in an open position. For example, in the open position the door 604 is not directly over the access opening 601 or a container 604 located at the container handling position. However, as described above, a camera can be used to provide a video of the container 604 in the container handling position to the display means 606 with the set of display elements 610 overlaid on the video of the container 604 and its compartments 608. As such, a set of display elements 610a-h can be overlaid on a video of the compartments of a container in order to show the correct association of each display element of the set of display elements with the relevant compartment. In some examples, the display means comprises a projector such that when the door 602 is in the open position, the set of display elements 610 can be displayed directly on a container received at the container handling position, as opposed to on the door 602, so that each display element is projected on to the compartment it is associated with.

### Method for operating a port coupled to a storage grid

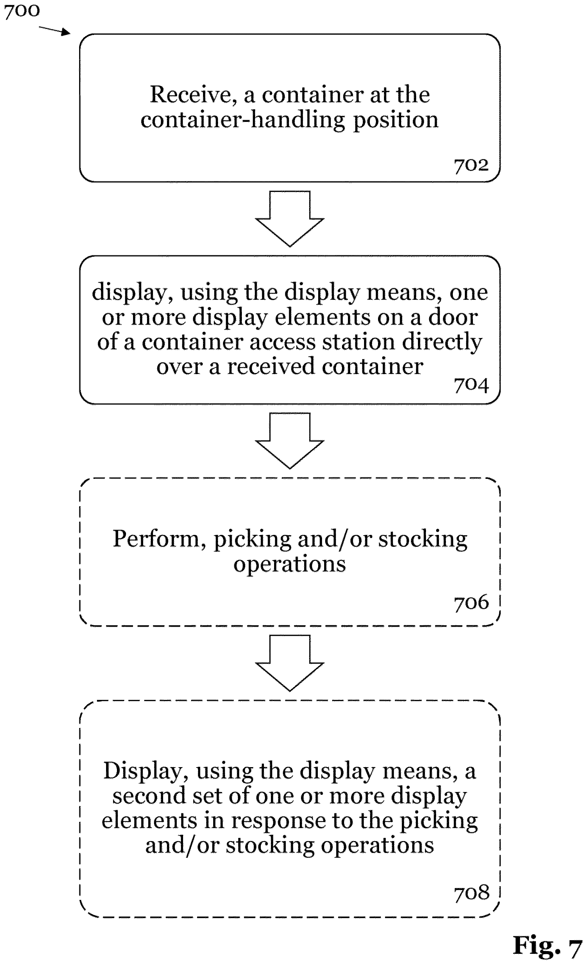

Fig.7 shows a method 700 for a container access station, such as the container access station 500, 600 of Figs. 5a-c, 6.

At method step 702, the container access station 500, 600 receives, a container 604 at the container-handling position. The container access station 500, 600 can receive the container 604 using any appropriate means such as, but not limited to, a conveyer 506, a carousel, a drawer, a lift, a container handling robot, an operator and/or a trolley. The container handling position may be directly below (or otherwise aligned in any other suitable direction with) an access opening 502, 601 of the container access station 500, 600 such that the container 604 or goods stored therein can be accessed through the access opening 502, 601.

At method step 704, the container access station 500, 600 displays, using display means 512, 606, a first set of one or more display elements 610 on a door 504, 602 of the container access station 500, 600 directly over a received container 604. The container 604 may comprise a number of compartments 608 (as shown in Fig. 6). A display element 610a-h of the set of one or more display elements 610 can be displayed over a particular compartment 608a-d of the one or more compartments 608 in order to show that the given display element 610a-h is associated with the compartment 608a-d over which the element is displayed. The door 504, 602 can be in a closed position in that it blocks access, via an access opening 502, 601, to the container 604. Both the door 504, 602 and display means 512, 606 can be transparent as to allow the display element 612a-h to be displayed over a compartment 608a-d of the container 604 whilst the container 604 remains visible. Alternatively, the display means 512, 606 can use input from a camera in order to display a real time video of the container 604 and overlay display elements 610a-h in the relevant positions. That is to say the display means 512, 606 can display a display element 610ah-h associated with a compartment 608a-d of the container 604 over a video, wherein the display element 610a-h is overlaid over the portion of the video containing the associated compartment 608a-d. In these embodiments the door 504, 602 can be in an open or closed position and the door 504, 602 and display means 512, 606 need not be transparent.

Optionally, at method step 706, the container access station 500, 600 can be used to perform picking and/or stocking operations. In picking and/or stocking operations the access opening can be used to move or add items from the container 604 received in the container handling position. As part of method step 706, the door 504, 602 may be moved to an open position (if the door is not already in an open position). The door 504, 602 can be moved into any position in which it does not obstruct the access opening 502, 601 to be considered to be in an open position. The door 504, 602 may be moved using automated means provided as part of the container access station 500, 600, such as motors or any other automated drive system. The door 504, 602 may also be manually moved between an open and closed position by an operator. In order to perform the pick and/or stocking operation the door 504, 602 must be in an open position wherein the access opening is at least partially uncovered. The picking and/or stocking operations are informed and facilitated by the set of display elements 610 displayed using the display means 512, 606. The picking and/or stocking operations can be performed by an operator as part of a guided human-machine interaction, the assistive guidance being delivered using the set of display elements 610.

Optionally, at method step 708, the container access station 500, 600 can display, using the display means 512, 606, a second set of one or more display elements 610 in response to the picking and/or stocking operations performed at method step 706. The second set of display elements 610 may be different to the first set of display elements 610 and can comprise updated instructions and/or information in response to the operations and/or actions performed by the operator in method step 706. The updates can be based on data received by a camera which captures and determines the action performed by the operator at step 706. Updating the information and/or instructions by displaying a second set of display elements 610 can comprise updating one or more display elements 610a-h to convey to the operator a new instruction, such as an updated quantity, item type, or operation to perform. The second set of display elements 610 can comprise an error notification to advise the user to undo an action taken at method step 706. By updating to a second set of one or more display elements 610 the operator is provided a continuous and guided human-interaction with the container access station 500, 600 in order to provide real time assistance to their picking and/or placing operations. Method steps 706 and 708 can be repeatedly performed until a picking and/or stocking process associated with a container 604 is completed.

### Penultimate comments

It is to be understood that within the scope of the present disclosure, both the container access station 500, 600 and the method 700 for a container access station 500, 600 described above can be provided as part of an automated storage and retrieval system, such as the automated storage and retrieval system described in reference to Figs. 1-4.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A container access station configured to receive a container at a container-handling position, the container access station comprising:
an access opening configured to provide access to a container when the container is received at the container handling position;
a door configured to cover the access opening when the door is in a closed position and allow access to the access opening when the door is in an open position;
a display means configured to display a set of one or more display elements on the door.

2. The container access station of any preceding claim wherein the set of display elements comprises at least one of:
a textual display element;
a graphical display element; or
a numerical display element.

3. The container access station of claim 1 or 2, further comprising a control system configured to control the display of the set of display elements by the display means.

4. The container access station of claim 3, wherein the set of display elements comprises information associated with a container received at the container-handling position, and wherein the control system is further configured to determine the information displayed by the display means.

5. The container access station of any preceding claim, wherein the display means comprises a display screen fixed to the door.

6. The container access station of claim 5, wherein the display is one of a LCD, OLED or LED display, optionally wherein the display is transparent.

7. The container access station of any of any preceding claim, wherein the display means comprises a projector configured to project the set of display elements on to the door.

8. The container access station of any of any preceding claim, wherein the display means is configured to display the set of display elements on the door in a position directly over a container received at the container handling position;

9. The container access station of any of any preceding claim configured to receive a container comprising a plurality of compartments at the container handling-position; and,
wherein the display means is configured to display a first display element of the set of display elements over a first compartment of the plurality of compartments.

10. The container access station of claim 9, wherein the display means is configured to display a second display element of the set of display elements over a second compartment of the plurality of compartments.

11. The container access station of any preceding claim wherein the set of display elements comprises picking or placing instructions associated with a container received at the container handling position.

12. The container access station of claim 11, wherein the picking and/or placing instructions comprise at least one of:
a quantity of items to pick from the container and/or place into the container;
an indication of a position within the container to pick and/or place items;
an indication as to whether an item has been correctly picked and/or placed; or
an identification of an item to pick and/or place.

13. The container access station of any preceding claim wherein the set of display elements comprises information associated with the container access station; and optionally,
wherein the information associated with the container access station comprises at least one of:
pick and place analytics;
user statistics;
gamification mechanics; or
error notifications.

14. An automated storage and retrieval system comprising a grid, a container access station as claimed in any preceding claim.

15. A method of using a container access station according to any of claims 1-12, the method comprising:
receiving a container at the container-handling position;
displaying, using the display means, one or more display elements on the door of the container access station directly over the received container,
the display elements comprises at least one of:
a textual display element;
a graphical display element; or
a numerical display element including information associated with the received container.
